# EUROPÄISCHE PATENTSCHRIFT

(11) **EP 4 055 303 B1**
(45) Veröffentlichungstag und Bekanntmachung des Hinweises auf die Patenterteilung: **04.06.2025**
(21) Anmeldenummer: 20800910.0
(22) Anmeldetag: 03.11.2020
(51) Int. Cl.: F16H 55/17

(54) **STIRNRAD**
SPUR GEAR
ENGRENAGE DROIT

(30) Priorität: 08.11.2019 DE 102019130185
(43) Veröffentlichungstag der Anmeldung: 14.09.2022
(73) Patentinhaber: VOLKSWAGEN AKTIENGESELLSCHAFT, 38440 Wolfsburg (DE)
(72) Erfinder: LENZ, Andreas, 34466 Wolfhagen (DE); DEUBNER, Christian, 34260 Kaufungen (DE); MOSANER, Oliver, 34127 Kassel (DE); WOLF, Sebastian, 34127 Kassel (DE)
(74) Vertreter: Schneider, Peter Christian
(86) Internationale Anmeldenummer: PCT/EP2020/080833
(87) Internationale Veröffentlichungsnummer: WO 2021/089555

(56) Entgegenhaltungen:
- WO-A1-2017/054931
- DE-A1- 102006 012 861
- DE-A1- 102014 220 471
- DE-A1- 102017 201 383
- DE-C- 470 406
- DE-C1- 10 041 696
- DE-U1- 202007 017 040
- US-A- 3 371 549
- US-A1- 2018 180 155
- US-A1- 2018 238 423

## Beschreibung

### Gebiet der Erfindung

Die Erfindung bezieht sich auf ein Stirnrad, umfassend
- einen radial außen angeordneten, rotationssymmetrisch stirnverzahnten Zahnkranz,
- eine radial innen angeordnete Nabe und
- eine den Zahnkranz mit der Nabe - vorzugsweise einstückig - verbindende, rotationssymmetrische Radialverbindungsstruktur,
wobei die Radialverbindungsstruktur voneinander beabstandete, sich zwischen der Nabe und dem Zahnkranz erstreckende Streben und zwischen den Streben angeordnete Axialdurchbrüche und einen scheibenförmigen, von den Axialdurchbrüchen durchsetzten Grundkörper mit einer axialen Vorderseite und einer axialen Rückseite aufweist, auf dessen Vorderseite die Streben angeordnet sind, aufweist.

### Stand der Technik

Ein derartiges Stirnrad ist bekannt aus der DE 470 406 A.

Stirnräder, insbesondere solche, die in Getrieben von Kraftfahrzeug-Antriebseinheiten Einsatz finden, sind erheblichen mechanischen Belastungen ausgesetzt. Ihre Stabilität und insbesondere ihre Dauerfestigkeit sind daher wesentliche Qualitätsmerkmale. Andererseits ist es ein allgemeines Konstruktionsziel, die bewegten und die schweren Massen im Kraftfahrzeugbau so weit wie möglich zu reduzieren. Dies führt insbesondere bei Zahnrädern zu einem Zielkonflikt.

Die DE 100 41 696 C1 offenbart ein stabiles Stirnrad bei welchem durch eine besondere Gestaltung der Radialverbindungsstruktur zwischen dem äußeren Zahnkranz und der inneren Nabe eine erhebliche Materialeinsparung ohne wesentliche Stabilitätsverluste vorgenommen wurde. Die dort offenbarte Radialverbindungsstruktur besteht aus zwei Sätzen von streifenförmigen, radialen Streben, die in zwei axial zueinander versetzten Ebenen einerseits an die Nabe und andererseits an den Zahnkranz angeformt und dabei in Umfangsrichtung um eine halbe Periode zueinander winkelversetzt sind. Ein derartiges Zahnrad kann aus Stahl geschmiedet werden.

Ein ähnlich geformtes Zahnrad, allerdings aus thermoplastischem Material, ist aus der US 3,371,549 bekannt. Hier liegen die Ansatzpunkte sämtlicher Streben sowohl an der Nabe als auch am Zahnkranz in derselben Radialebene, d.h. sie sind nicht axial zueinander versetzt. Die Streben sind jedoch in axialer Richtung geschwungen ausgebildet, wobei jeweils zwei einander in Umfangsrichtung benachbarte Streben in axial umgekehrter Richtung gebogen sind.

Aus der DE 10 2017 201 383 A1 ist eine Radialverbindungsstruktur eines aus Polymermaterial spritzgegossenen Stirnrades bekannt, die aus einem scheibenförmigen Grundkörper mit beidseitig darauf aufgesetzten, Arabesken-artigen Stegen besteht. Bei Stirnrädern aus Kunststoff lässt die moderne Spritzgusstechnik nahezu beliebige und im Hinblick auf Steifigkeit und Materialeinsparung optimierte Formgebungen zu, wobei jedoch die Gesamtfestigkeit solcher Zahnräder materialbedingt äußerst beschränkt ist. Insbesondere eignen sich Kunststoff-Zahnräder grundsätzlich nicht für den mechanisch hochstrapazierten Einsatz in Kraftfahrzeug-Antriebseinheiten. Hier ist eine Fertigung aus metallischen Werkstoffen, insbesondere Stahl zwingend geboten, wobei sich insbesondere die Herstellung durch Umformverfahren, speziell durch Schmieden als in Hinblick auf Fertigungsgeschwindigkeit und Fertigungskosten besonders vorteilhaft erwiesen hat.

Die eingangs genannte, gattungsbildende DE 470 406 A offenbart ein Zahnrad mit einer axial außermittig und daher asymmetrisch angeordneten Radialverbindungsstruktur. An ihrem radial äußeren Rand, d.h. im Übergangsbereich zum Zahnkranz, ist sie ringscheibenförmig mit vielen kurzen, radialen Verstärkungsstegen gestaltet. Radial innen ist sie hingegen als ein Stern von wenigen radialen Streben ausgebildet.

Die DE 20 2007 017 040 U1 offenbart ein Zahnrad mit azimutal so weit verbreiterten und schräg angestellten "Speichen", dass diese eher einen flügelartigen Charakter aufweisen. In einer besonderen Ausführungsform offenbart diese Druckschrift zudem ein Zahnrad mit unterschiedliche zueinander verkippten Streben.

Die WO 2017/054931 A1 offenbart einen gebauten Radkörper.

Die US 2018/0238423 A1 offenbart ein gebautes Stufenzahnrad, dessen größerer Zahnkranz mit einer Scheibe verschraubt ist, die zugleich als Träger eines Vollkörpers dient, auf welchem der kleiner Zahnkranz montiert ist.

### Aufgabenstellung

Es ist die Aufgabe der vorliegenden Erfindung ein gattungsgemäßes Stirnrad im Hinblick auf den Zielkonflikt zwischen Stabilität einerseits und Materialeinsparung andererseits weiter zu optimieren, wobei insbesondere eine Fertigung aus metallischen Werkstoffen, insbesondere aus Stahl, vorzugsweise durch Umformverfahren, insbesondere durch Schmieden möglich sein soll.

### Darlegung der Erfindung

Diese Aufgabe wird in Verbindung mit den Merkmalen des Oberbegriffs von Anspruch 1 dadurch gelöst, dass die Streben einen Satz Streben erster Art und einen Satz Streben zweiter Art umfassen, wobei die Streben erster Art im Profil höher als breit und die Streben zweiter Art im Profil breiter als hoch sind.

Bevorzugte Ausführungsformen der Erfindung sind Gegenstand der abhängigen Patentansprüche.

Der Erfindung liegt der Gedanke einer Kombination aus einem Scheiben- und einem Speichenrad zugrunde, wobei die Scheiben- und die Speichenkomponenten asymmetrisch aneinander angeformt sind. Die Rückseite des erfindungsgemäßen Stirnrades wirkt im Wesentlichen wie ein von vergleichsweise kleinen Axialdurchbrüchen durchbrochenes Scheibenrad. Seine Vorderseite hingegen wirkt im Wesentlichen wie ein Speichenrad mit (bis auf die Axialdurchbrüche) geschlossenen Speichenzwischenräumen. Mit anderen Worten ist der scheibenförmige Grundkörper ausschließlich einseitig, nämlich auf seiner axialen Vorderseite, mit besagten, als Speichen wirkenden Streben bewehrt.

Der scheibenförmige Grundkörper bietet eine gewisse Grundstabilität insbesondere im Hinblick auf axial wirkende Kräfte. Er ist dabei jedoch zum Zwecke der Materialeinsparung so dünn ausgelegt, dass er die bei Betrieb auftretenden hohen Zug- und Schubkräfte in Umfangsrichtung alleine nicht schadlos aufnehmen könnte. Hierzu dienen die Streben, die allerdings so filigran ausgestaltet sein können, dass sie allein, d.h. ohne den scheibenförmigen Grundkörper, nicht in der Lage wären, Axialkräfte schadlos aufzunehmen. Die erfindungsgemäß gewählte axiale Asymmetrie hat sich im Hinblick auf die Stabilität des resultierenden Stirnrades als unschädlich erwiesen; im Hinblick auf eine Fertigung durch metallische Umformverfahren, insbesondere durch Schmieden hat es sich jedoch als höchst vorteilhaft erwiesen, die durch die Streben bedingte, komplexe Formgebung ausschließlich einseitig zu erzeugen und die Rückseite des Grundkörpers einfach geformt und insbesondere frei von derartigen Streben zu halten.

Als erfindungszentrales Merkmal umfassen die Streben einen Satz Streben erster Art und einen Satz Streben zweiter Art, wobei die Streben erster Art im Profil höher als breit und die Streben zweiter Art im Profil breiter als hoch sind. Auf diese Weise sind die unterschiedlichen Arten von Streben für die Aufnahme unterschiedlicher Arten von einwirkenden Kräften optimiert, was zu einer "Aufgabenverteilung" zwischen den Streben führt, von denen jede einzelne daher filigraner ausgestaltet sein kann.

Bei einer Weiterbildung dieses Ansatzes der "Aufgabenverteilung" ist vorgesehen, dass die Streben gerade erstreckt und gegen die ihren jeweiligen Ansatzpunkt schneidende Radiale um die Axialrichtung verkippt sind, wobei die Streben erster Art in zu den Streben zweiter Art umgekehrter Richtung verkippt sind. Eine solche Ausgestaltung eignet sich insbesondere für Stirnräder, die im Betrieb mit einer bevorzugten Primär-Umlaufrichtung, d.h. nicht gleichermaßen in verschiedenen Richtungen, rotieren. Die schmal und hoch ausgebildeten Streben erster Art, die dabei vorzugsweise an ihrem Naben-Ansatzpunkt entgegen der beabsichtigten Rotationsrichtung gekippt sind, dienen dabei vorwiegend der Aufnahme von Zugkräften. Die flach und breit ausgebildeten Streben zweiter Art, die bevorzugt an ihrem Naben-Ansatzpunkt in Richtung der beabsichtigten Drehrichtung verkippt sind, dienen insbesondere der Aufnahme von Schubkräften.

Besonderes bevorzugt sind die Streben erster Art dabei um einen größeren Winkelbetrag als die Streben zweiter Art verkippt. Dies resultiert aus Einsichten der Erfinder zum Kräftefluss der unterschiedlichen, abzustützenden Kräftearten.

Wie erläutert, folgt die vorliegenden Erfindung, insbesondere in ihren geschilderten Weiterbildungen, dem Konzept der Verteilung unterschiedlicher Aufgaben auf unterschiedliche Strukturelemente der Radialverbindungsstruktur. Um diesem Konzept in möglichst reiner Form gerecht zu werden, ist bevorzugt vorgesehen, dass die einzelnen Streben einander nicht schneiden. Vielmehr sieht eine bevorzugte Weiterbildung der Erfindung vor, dass die Streben jedes Paares zweier benachbarter Streben verschiedener Art einander entweder in ihren radial äußeren Ansatzpunkten am Zahnkranz oder ihren radial inneren Ansatzpunkten an der Nabe kontaktieren. Ein Kontakt zwischen benachbarten Streben in ihrem Erstreckungsbereich zwischen ihren jeweils beiden Ansatzpunkten ist bei dieser Ausführungsform ausdrücklich nicht vorgesehen. Der Fachmann wird dabei natürlich verstehen, dass unter dem Begriff des Ansatz-"Punktes" selbstverständlich ein sich aus der endlichen Breite der einzelnen Strukturelemente ergebender, ausgedehnter und nicht im mathematischen Sinne punktförmiger Bereich zu verstehen ist.

Die Rückseite des Grundkörpers ist, wie eingangs erläutert, im Wesentlichen flach, d.h. insbesondere ohne aus der Scheibenebene hervorspringende Streben gestaltet. Eine bevorzugte Ausführungsform der Erfindung sieht jedoch vor, dass auf der Rückseite des Grundkörpers ein nach radial innen in die Nabe übergehender und nach radial außen sternförmig ausgezogener Verstärkungskörper angeordnet ist. Die Sternspitzen des Verstärkungskörpers erstrecken sich dabei keinesfalls bis zum Zahnkranz, was sie zu Streben im Sinne der hiesigen Beschreibung machen würde. Im Gegenteil ist bevorzugt vorgesehen, dass die Axialdurchbrüche in radialer Verlängerung der Sternspitzen des Verstärkungskörpers angeordnet sind. Die Axialdurchbrüche markieren Positionen in der Radialverbindungsstruktur, an denen die bei Betrieb auftretenden Kräfte vorbei (nämlich über die Streben) geleitet werden. Folglich kann an diesen Positionen eine maximale Materialeinsparung, d.h. eine Ausnehmung vorgesehen werden.

Die Form der Axialdurchbrüche kann unterschiedlich gestaltet sein. Bei einer ersten Ausführungsform sind sie kreisrund. Diese Form ist im Hinblick auf die Herstellung besonders vorteilhaft. Insbesondere können solche kreisrunden Durchbrüche nachträglich gebohrt werden.

Im Hinblick auf die Stabilitätsoptimierung günstiger ist jedoch, wenn die Axialdurchbrüche in Form abgerundeter, vorzugsweise gleichschenkliger, flacher (Winkelmaß der Spitze > 90°) Dreiecke mit nach radial innen gerichteter Spitze ausgebildet sind. Derartige Axialdurchbrüche müssen zwar im Rahmen eines komplexeren Umformverfahrens eingebracht werden. Sie erlauben jedoch eine vollständigere Wegnahme des Materials an den bei Betrieb unbelasteten Stellen und führen daher ohne Stabilitätseinbuße zu einer verbesserten Gewichtseinsparung.

Es hat sich gezeigt, dass die Axialposition einer erfindungsgemäß ausgestalteten Radialverbindungsstruktur für die Funktionseigenschaften des resultierenden Stirnrades weitestgehend unerheblich ist. Der Grundkörper kann daher, wie bevorzugt vorgesehen, axial außermittig angeordnet sein. Dies kann insbesondere bei im Hinblick auf bauraumheikle Konstruktionssituationen günstig sein. Diese Asymmetrie erlaubt nämlich die Schaffung eines einseitig der Radialverbindungsstruktur angeordneten Freiraumes zwischen Nabe und Zahnkranz, in den andere Getriebekomponenten eingreifen können.

Weitere Einzelheiten und Vorteile der Erfindung ergeben sich aus der nachfolgenden, speziellen Beschreibung und den Zeichnungen.

### Kurze Beschreibung der Zeichnungen

Es zeigen:
- Figur 1:: zwei vereinfachte Ansichten einer ersten Ausführungsform eines erfindungsgemäßen Stirnrades,
- Figur 2:: zwei vereinfachte Ansichten einer zweiten Ausführungsform eines erfindungsgemäßen Stirnrades,
- Figur 3:: eine Draufsicht auf die Vorderseite eines Stirnrades gemäß Figur 2,
- Figur 4:: eine Draufsicht auf die Rückseite des Stirnrades von Figur 2,
- Figur 5:: eine Schnittdarstellung entlang der Schnittlinie V-V in Figur 3,
- Figur 6:: eine Schnittdarstellung entlang der Schnittlinie VI-VI in Figur 3 sowie
- Figur 7:: eine Schnittdarstellung entlang der Schnittlinie VII-VII in Figur 3.

### Ausführliche Beschreibung bevorzugter Ausführungsformen

Gleiche Bezugszeichen in den Figuren weisen auf gleiche oder analoge Elemente hin.

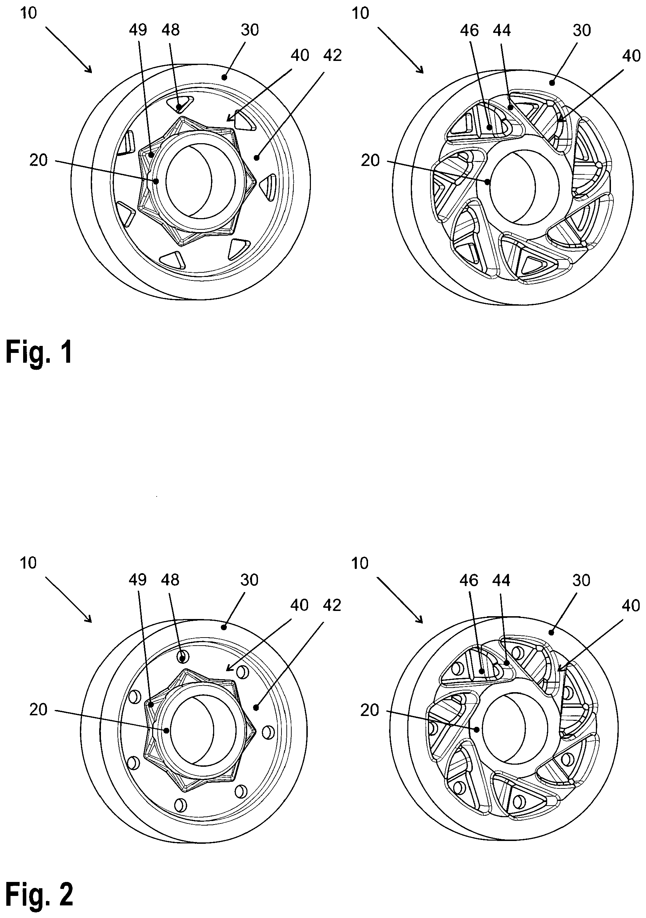

Figur 1 zeigt in vereinfachter Darstellung die Vorderseite (rechts in Figur 1) und die Rückseite (links in Figur 1) einer ersten Ausführungsform eines erfindungsgemäßen Stirnrades 10. Das Stirnrad 10 umfasst radial innen eine Nabe 20 und radial außen einen Zahnkranz 30, dessen Stirnverzahnung in Figur 1 allerdings nicht dargestellt ist. Zwischen der Nabe 20 und dem Zahnkranz 30 erstreckt sich eine Radialverbindungsstruktur 40, deren konkreter Aufbau im Fokus der vorliegenden Erfindung steht.

Die Radialverbindungsstruktur 40 umfasst einen scheibenförmigen Grundkörper 42, der insbesondere in der Rückansicht des Stirnrades 10 (links in Figur 1) gut zu erkennen ist. Auf der rechts in Figur 1 dargestellten Vorderseite der Radialverbindungsstruktur erheben sich Streben erster Art 44 und Streben zweiter Art 46 aus dem scheibenförmigen Grundkörper 42. Die Streben erster Art 44 sind schmal und hoch, d.h. insbesondere höher als breit, ausgebildet. Die Streben zweiter Art 46 sind flach und breit, d.h. insbesondere breiter als hoch, ausgebildet. Die Streben 44, 46 sind im Wesentlichen gerade erstreckt, verlaufen allerdings nicht radial. Vielmehr sind sie gegen die sie jeweils in ihrem Ansatzpunkt (an der Nabe 20 oder am Zahnkranz 30) schneidenden Radiale verkippt. Die Verkippung der Streben erster Art 44 einerseits und der Streben zweiter Art 46 andererseits erfolgt dabei in entgegengesetzter Richtung. Bei der dargestellten Ausführungsform sind die Streben erster Art 44 an ihrem Ansatzpunkt zur Nabe 20 gegenüber der dortigen Radialen nach links verkippt. Die Streben zweiter Art 46 sind an ihrem Ansatzpunkt an der Nabe 20 gegenüber der dortigen Radialen nach rechts verkippt. Der Winkelbetrag, um den die Streben erster Art 44 verkippt sind, ist dabei größer als der Winkelbetrag, um den die Streben zweiter Art 46 verkippt sind.

Bei der gezeigten Ausführungsform sind die Streben 44, 46 so angeordnet, dass sie einander nicht schneiden. Speziell erstrecken sich die Streben zweiter Art 46 vom Naben-Ansatzpunkt einer Strebe erster Art 44 bis zum Zahnkranz-Ansatzpunkt der benachbarten Strebe erster Art 44. Analoges gilt für Streben erster Art. Jede Strebe erster Art 44 erstreckt sich vom Naben-Ansatzpunkt einer Strebe zweiter Art 46 bis zum Zahnkranz-Ansatzpunkt der benachbarten Strebe zweiter Art 46.

Die nicht mit Streben 44, 46 bewehrten Bereiche des Grundkörpers 40 sind als Axialdurchbrüche ausgestaltet. Bei der Ausführungsform von Figur 1 haben die Axialdurchbrüche 48 die Form abgerundeter, flacher, gleichschenkliger Dreiecke mit nach radial innen ausgerichteter Spitze.

Auf der Rückseite des Grundkörpers 42 ist dessen an die Nabe 20 angrenzender Radialbereich mit einem sternförmigen Verstärkungskörper 49 bewehrt. Dieser erhebt sich aus der Fläche der Scheibe und geht in die Nabe 20 über. Seine Sternspitzen liegen jeweils mit dem Zentrum eines Axialdurchbruchs 48 auf derselben Radialen.

Figur 2 zeigt eine alternative Ausführungsform eines erfindungsgemäßen Stirnrades 10, welches sich von der Ausführungsform von Figur 1 ausschließlich durch die Form der Axialdurchbrüche 48 unterscheidet, die hier mit kreisrunder Form gestaltet sind.

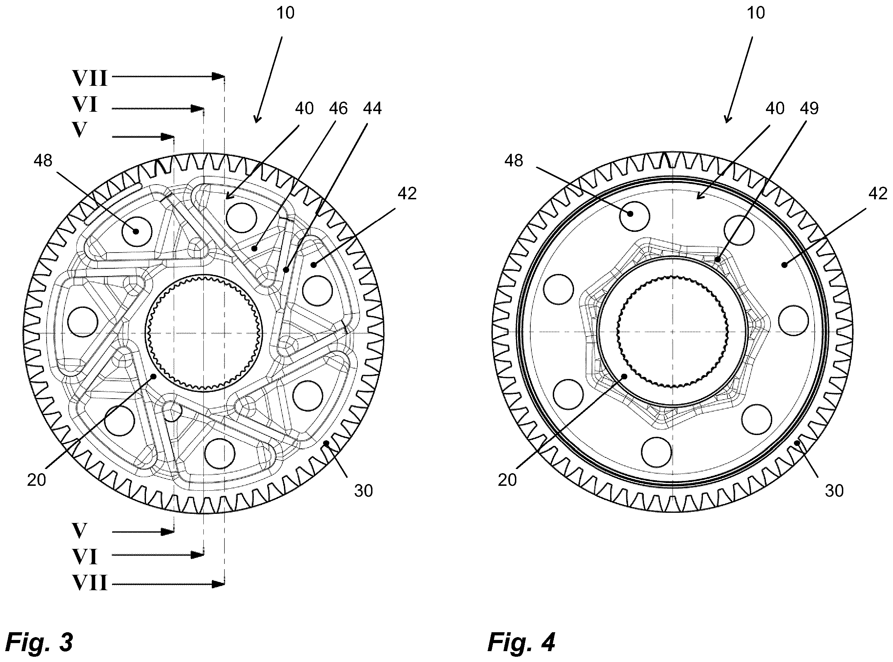

Figur 3 zeigt eine detailliertere Draufsicht auf die Vorderseite des Stirnrades 10 von Figur 2. Bei der Darstellung von Figur 3 ist auch die Verzahnung des Zahnkranzes 30 gut erkennbar. Die Nabe 20 ist an ihrem Innenumfang mit einer Steckverzahnung versehen. Figur 4 zeigt die Rückseite desselben Stirnrades 10.

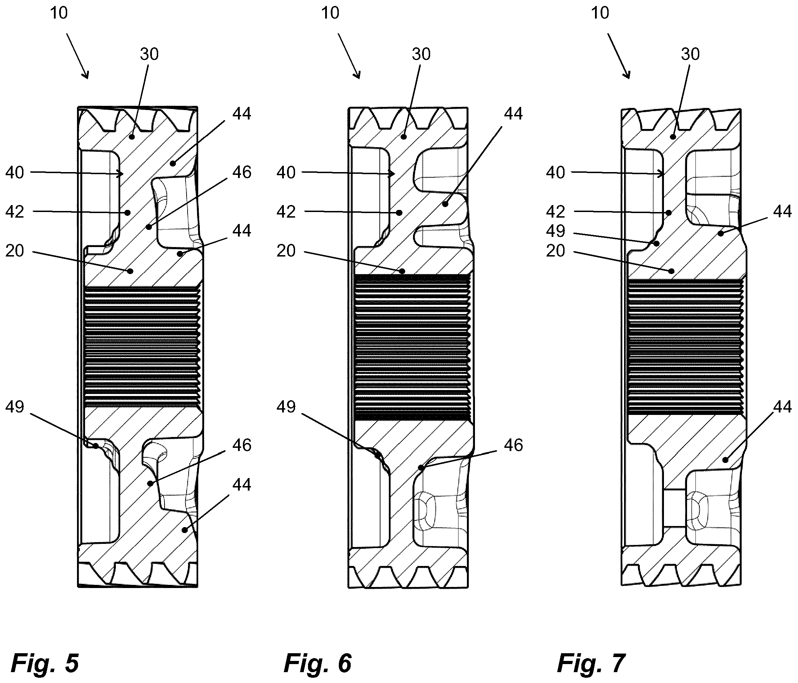

Die Figuren 5 bis 7 zeigen Querschnitte durch das Stirnrad 10 der Figuren 3 und 4 entlang der Schnittlinien V-V, VI-VI bzw. VII-VII in Figur 3. Die Zusammenschau der Figuren 3 bis 7 sollte dem Fachmann ein plastisches Bild der erfindungsgemäßen Gestaltung der Radialverbindungsstruktur 40 vermitteln.

Zusätzlich zeigen die Schnittdarstellungen der Figuren 5 bis 7 die bevorzugte Ausführungsform der Erfindung, gemäß der der Grundkörper 42 nicht axial mittig, sondern (in den Figuren nach links) versetzt angeordnet ist. Denkbar wäre auch ein Versatz in umgekehrter Richtung sowie Versätze stärkeren oder schwächeren Ausmaßes.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere eignet sich die erfindungsgemäße Form für eine Herstellung des erfindungsgemäßen Stirnrades aus metallischem Werkstoff, insbesondere aus Stahl, wobei die Herstellung mittels Umformverfahren, insbesondere durch Schmieden erfolgen kann, wie dies auch bevorzugt vorgesehen ist, um Stirnräder für den Einsatz in Antriebseinheiten von Kraftfahrzeugen, insbesondere in Getrieben, zu schaffen.

### Bezugszeichenliste

- 10: Stirnrad
- 20: Nabe
- 30: Zahnkranz
- 40: Radialverbindungsstruktur
- 42: Grundkörper
- 44: Strebe erster Art
- 46: Strebe zweiter Art
- 48: Axialdurchbruch
- 49: Verstärkungskörper

## Patentansprüche

1. Stirnrad (10), umfassend
- einen radial außen angeordneten, stirnverzahnten Zahnkranz (30),
- eine radial innen angeordnete Nabe (20) und
- eine den Zahnkranz (30) mit der Nabe (20) einstückig verbindende, rotationssymmetrische Radialverbindungsstruktur (40),
wobei die Radialverbindungsstruktur (40) voneinander beabstandete, sich zwischen der Nabe (20) und dem Zahnkranz (30) erstreckende Streben (44, 46) und zwischen den Streben (44, 46) angeordnete Axialdurchbrüche (48) und einen scheibenförmigen, von den Axialdurchbrüchen (48) durchsetzten Grundkörper (42) mit einer axialen Vorderseite und einer axialen Rückseite aufweist, auf dessen Vorderseite die Streben (44, 46) angeordnet sind, aufweist,
**dadurch gekennzeichnet,**
**dass** die Streben (44, 46) einen Satz Streben erster Art (44) und einen Satz Streben zweiter Art (46) umfassen, wobei die Streben erster Art (44) im Profil höher als breit und die Streben zweiter Art (46) im Profil breiter als hoch sind.

2. Stirnrad (10) nach Anspruch 1,
**dadurch gekennzeichnet,**
**dass** die Streben (44, 46) gerade erstreckt und gegen die ihren Ansatzpunkt schneidende Radiale um die Axialrichtung verkippt sind, wobei die Streben erster Art (44) in zu den Streben zweiter Art (46) umgekehrter Richtung verkippt sind.

3. Stirnrad (10) nach Anspruch 2,
**dadurch gekennzeichnet,**
**dass** die Streben erster Art (44) um einen größeren Winkelbetrag als die Streben zweiter Art (46) verkippt sind.

4. Stirnrad (10) nach einem der Ansprüche 2 bis 3,
**dadurch gekennzeichnet,**
**dass** die Streben (44, 46) jedes Paares zweier benachbarter Streben verschiedener Art (44; 46) einander entweder in ihren radial äußeren Ansatzpunkten am Zahnkranz (30) oder ihren radial inneren Ansatzpunkten an der Nabe (20) kontaktieren.

5. Stirnrad (10) nach einem der vorangehenden Ansprüche,
**dadurch gekennzeichnet,**
**dass** auf der Rückseite des Grundkörpers (42) ein nach radial innen in die Nabe (20) übergehender und nach radial außen sternförmig ausgezogener Verstärkungskörper (49) angeordnet ist.

6. Stirnrad (10) nach Anspruch 5,
**dadurch gekennzeichnet,**
**dass** die Axialdurchbrüche (48) in radialer Verlängerung der Sternspitzen des Verstärkungskörpers (49) angeordnet sind.

7. Stirnrad (10) nach einem der vorangehenden Ansprüche,
**dadurch gekennzeichnet,**
**dass** die Axialdurchbrüche (48) kreisrund ausgebildet sind.

8. Stirnrad (10) nach einem der Ansprüche 1 bis 6,
**dadurch gekennzeichnet,**
**dass** die Axialdurchbrüche (48) in Form abgerundeter, gleichschenkliger, flacher Dreiecke mit nach radial innen gerichteter Spitze ausgebildet sind.

9. Stirnrad (10) nach einem der vorangehenden Ansprüche,
**dadurch gekennzeichnet,**
**dass** der Grundkörper (42) axial außermittig angeordnet ist.

## Claims

1. Spur gear (10) comprising
- a spur-toothed gear rim (30) arranged radially on the outside,
- a hub (20) arranged radially on the inside, and
- a rotationally symmetrical radial connecting structure (40) integrally connecting the gear rim (30) to the hub (20),
the radial connecting structure (40) having struts (44, 46) which are spaced apart from one another and extend between the hub (20) and the gear rim (30), axial through-openings (48) arranged between the struts (44, 46), and a disc-shaped main body (42) which is penetrated by the axial through-openings (48) and has an axial front side and an axial rear side, on the front side of which the struts (44, 46) are arranged,
**characterized in that**
the struts (44, 46) comprise a set of struts of a first type (44) and a set of struts of a second type (46), the struts of the first type (44) being taller in profile than they are wide and the struts of the second type (46) being wider in profile than they are tall.

2. Spur gear (10) according to claim 1,
**characterized in that**
the struts (44, 46) extend in a straight line and are tilted about the axial direction with respect to the radial intersecting their attachment point, the struts of the first type (44) being tilted in the opposite direction to the struts of the second type (46).

3. Spur gear (10) according to claim 2,
**characterized in that**
the struts of the first type (44) are tilted by a greater angular amount than the struts of the second type (46).

4. Spur gear (10) according to either of claims 2 to 3,
**characterized in that**
the struts (44, 46) of each pair of two adjacent struts of different types (44; 46) contact one another either at their radially outer attachment points on the gear rim (30) or at their radially inner attachment points on the hub (20).

5. Spur gear (10) according to any of the preceding claims,
**characterized in that**
a reinforcing body (49) which merges radially inward into the hub (20) and extends radially outward in a star shape is arranged on the rear side of the main body (42).

6. Spur gear (10) according to claim 5,
**characterized in that**
the axial through-openings (48) are arranged as a radial extension of the star tips of the reinforcing body (49).

7. Spur gear (10) according to any of the preceding claims,
**characterized in that**
the axial through-openings (48) are circular.

8. Spur gear (10) according to any of claims 1 to 6,
**characterized in that**
the axial through-openings (48) are designed in the form of flat, rounded isosceles triangles having a tip directed radially inward.

9. Spur gear (10) according to any of the preceding claims,
**characterized in that**
the main body (42) is arranged axially eccentrically.

## Revendications

1. Pignon droit (10), comprenant
- une couronne dentée (30) à denture frontale, disposée radialement à l'extérieur,
- un moyeu (20) disposé radialement à l'intérieur, et
- une structure de liaison radiale (40) à symétrie de révolution reliant d'un seul tenant la couronne dentée (30) au moyeu (20),
dans lequel la structure de liaison radiale (40) présente des montants (44, 46) espacés les uns des autres et s'étendant entre le moyeu (20) et la couronne dentée (30) et des passages axiaux (48) disposés entre les montants (44, 46) et présente un corps de base (42) en forme de disque, traversé par les passages axiaux (48) et comportant une face avant axiale et une face arrière axiale, sur la face avant duquel corps de base les montants (44, 46) sont disposés,
**caractérisé en ce que**
les montants (44, 46) comprennent un jeu de montants de premier type (44) et un jeu de montants de second type (46), dans lequel les montants de premier type (44) sont plus hauts que larges dans le profilé et les montants de second type (46) sont plus larges que hauts dans le profilé.

2. Pignon droit (10) selon la revendication 1,
**caractérisé en ce que**
les montants (44, 46) s'étendent de manière rectiligne et sont inclinés dans la direction axiale par rapport à la radiale qui coupe leur point initial, dans lequel les montants de premier type (44) sont inclinés dans la direction inverse à celle des montants de second type (46).

3. Pignon droit (10) selon la revendication 2,
**caractérisé en ce que**
les montants de premier type (44) sont inclinés d'une valeur angulaire supérieure à celle des montants de second type (46).

4. Pignon droit (10) selon l'une des revendications 2 à 3,
**caractérisé en ce que**
les montants (44, 46) de chaque paire de deux montants adjacents de types différents (44 ; 46) entrent en contact l'un avec l'autre soit au niveau de leurs points initiaux radialement extérieurs sur la couronne dentée (30), soit au niveau de leurs points initiaux radialement intérieurs sur le moyeu (20).

5. Pignon droit (10) selon l'une des revendications précédentes,
**caractérisé en ce qu'**
un corps de renforcement (49) se prolongeant radialement vers l'intérieur dans le moyeu (20) et s'étendant radialement vers l'extérieur en forme d'étoile est disposé sur la face arrière du corps de base (42).

6. Pignon droit (10) selon la revendication 5,
**caractérisé en ce que**
les passages axiaux (48) sont disposés dans un prolongement radial des pointes d'étoile du corps de renforcement (49).

7. Pignon droit (10) selon l'une des revendications précédentes,
**caractérisé en ce que**
les passages axiaux (48) sont réalisés de manière circulaire.

8. Pignon droit (10) selon l'une des revendications 1 à 6,
**caractérisé en ce que**
les passages axiaux (48) sont réalisés sous forme de triangles plats, isocèles et arrondis comportant une pointe orientée radialement vers l'intérieur.

9. Pignon droit (10) selon l'une des revendications précédentes,
**caractérisé en ce que**
le corps de base (42) est disposé axialement de manière excentrée.
